# EUROPÄISCHE PATENTSCHRIFT

(11) **EP 0 858 557 B1**
(45) Veröffentlichungstag und Bekanntmachung des Hinweises auf die Patenterteilung: **08.03.2000**
(21) Anmeldenummer: 97941824.1
(22) Anmeldetag: 25.08.1997
(51) Int. Cl.: F02M 69/54, G05D 16/06

(54) **DRUCKREGELVENTIL**
PRESSURE CONTROL VALVE
SOUPAPE DE REGULATION DE PRESSION

(30) Priorität: 31.08.1996 DE 19635439
(43) Veröffentlichungstag der Anmeldung: 19.08.1998
(73) Patentinhaber: ROBERT BOSCH GMBH, 70442 Stuttgart (DE)
(72) Erfinder: SCHWEGLER, Helmut, D-74385 Pleidelsheim (DE); HERBST, Kurt, D-71576 Burgstetten (DE); HÖPFL, Roland, D-87435 Kempten (DE); BÄCHLE, Ludwig, D-87527 Ofterschwang (DE); GREGORIUS, Thomas, D-71723 Grossbottwar (DE)
(86) Internationale Anmeldenummer: DE9701848
(87) Internationale Veröffentlichungsnummer: WO9809071

(56) Entgegenhaltungen:
- DE-A- 19 508 637
- US-A- 5 076 320
- US-A- 5 105 787
- US-A- 5 226 392

## Beschreibung

### Stand der Technik

Die Erfindung geht aus von einem Druckregelventil nach der Gattung des Anspruchs 1.

Ein heutzutage weit verbreitetes, in großer Stückzahl gefertigtes Druckregelventil umfaßt eine Vielzahl unterschiedlicher Einzelbauteile, die zu Baugruppen vormontiert werden, welche dann hauptsächlich durch Bördeln miteinander verbunden werden. Eine der Baugruppen umfaßt beispielsweise eine Membran und einen Schließkörper. Der Schließkörper umfaßt beispielsweise ein Kugelteil, ein Halteelement, einen Federteller und eine Feder. Diese Teile werden zusammengefügt und verstemmt. Eine weitere Baugruppe umfaßt ein Gehäuseteil, in das eine Metalldüse eingepreßt ist. Das Gehäuseteil besteht aus gestanztem Blech mit einer zentrischen Öffnung, wobei das Blech im Bereich der zentrischen Öffnung umgebogen ist. In diese zentrische Öffnung ist die Metalldüse eingepreßt. Das die Metalldüse haltende Gehäuseteil wird durch Bördeln mit einem weiteren, ein Oberteil bildenden Gehäuseteil verbunden. Zwischen die beiden Gehäuseteile wird die Membran mit dem Schließkörper eingelegt, bevor die beiden Gehäuseteile verbunden werden.

An das die Metalldüse haltende Gehäuseteil wird noch ein Stützring, ein Dichtelement und eine Stützscheibe anmontiert. Das Dichtelement ist ein O-Ring zwischen dem Stützring und der Stützscheibe. Ein solches Druckregelventil ist beispielsweise aus der US 5 226 392 A bekannt.

Von Nachteil bei dem bekannten Druckregelventil ist die große Anzahl der durch Montage miteinander zu verbindenden Einzelteile. Dadurch ist ein erheblicher Aufwand bei der Montage erforderlich. Es muß auch darauf geachtet werden, daß die Einzelteile sicher miteinander verbunden sind und während der Montage nicht beschädigt werden.

Weil das Druckregelventil häufig benötigt wird, ergeben auch kleine Einsparungen bei dem einzelnen Druckregelventil eine insgesamt betrachtet große Einsparung beim Aufwand für die Herstellung des Druckregelventils.

### Vorteile der Erfindung

Das erfindungsgemäße Druckregelventil mit den Merkmalen des Anspruchs 1 hat demgegenüber den Vorteil, daß die Anzahl der bei der Montage des Druckregelventils zusammenzufügenden Einzelteile reduziert ist. Dadurch können die Montageschritte während der Montage des Druckregelventils reduziert werden. Dies vereinfacht die Montage wesentlich und die Gefahr von Montagefehlern und dadurch bedingter Funktionsstörungen werden deutlich reduziert.

Durch die in den abhängigen Anspruchen aufgeführten Maßnahmen sind vorteilhafte Weiterbildungen und Verbesserungen des im Anspruch 1 angegebenen Druckregelventils möglich.

Wird der Kraftstoffrücklauf durch das angespritzte Anschlagstück geführt, so reduziert sich dadurch vorteilhafterweise die Anzahl der benötigten Bauteile und es entfällt die gegenüber dem bekannten Druckregelventil aufwendig herzustellende und kritische Verbindung zwischen der Metalldüse, durch die beim bekannten Druckregelventil der Kraftstoffrücklauf geführt wird, und dem Gehäuseteil.

Der Ventilsitz kann auf einfache Weise an dem angespritzten Anschlagstück vorgesehen werden. Für das angespritzte Anschlagstück kann vorteilhafterweise problemlos ein Material verwendet werden, das zur Bildung eines Ventilsitzes gut geeignet ist.

Das Gehäuseteil des Ventilgehäuses kann ohne merkbaren Mehraufwand so gestaltet werden, daß an dem Gehäuseteil der Ventilsitz gebildet wird, gegen den der Schließkörper beaufschlagt ist. Dadurch reduziert sich vorteilhafterweise die Anzahl der zu montierenden Einzelteile und das Gehäuseteil hat vorteilhafterweise vom Material her gute Eigenschaften, um als Ventilsitz dienen zu können. Die mechanische Bearbeitung des Ventilsitzes am Gehäuseteil ist vorteilhafterweise problemlos möglich.

Das angespritzte Anschlagstück kann sehr einfach so gestaltet werden, daß auf vorteilhafte Weise das Anschlagstück zum Abdichten zwischen dem Kraftstoffzulauf und dem Kraftstoffrücklauf dienen kann. Die Abdichtung kann zusätzlich noch durch ein zusätzliches, kostengünstig beschaffbares Dichtelement, vorzugsweise ein O-Ring, erfolgen. Die Abdichtung kann aber auch mit Hilfe einer direkt an das Anschlagstück angeformten Dichtung erfolgen. Dies verringert die Anzahl der zu montierenden Einzelteile vorteilhafterweise zusätzlich.

Das angespritzte Anschlagstück kann vorteilhafterweise zur Abdichtung zwischen der Kraftstoffversorgungsanlage und der das Druckregelventil umgebenden Umgebung dienen. Zwischen dem Anschlagstück und der Kraftstoffversorgungsanlage kann ein Dichtelement, vorzugsweise ein am Druckregelventil gehaltener O-Ring, vorgesehen sein. Das Anschlagstück kann vorteilhafterweise aber auch so gestaltet werden, daß auf ein separates Dichtelement verzichtet werden kann. Dies kann durch eine das Anschlagstück angeformte Dichtung vorteilhafterweise ohne Aufwand geschehen.

Wird das angespritzte Anschlagstück so gestaltet, daß es einstückig zusammenhängend ausgeführt ist, dann verringert sich der Aufwand zum spritztechnischen Herstellen des Anschlagstücks vorteilhafterweise wesentlich.

Durch spritztechnisches Herstellen und Verbinden des Schließkörpers mit der Membran werden die montagemäßig zusammenzufügenden Einzelteile vorteilhafterweise zusätzlich deutlich reduziert.

Besteht der Schließkörper mindestens teilweise aus Kunststoff, so wird der Herstellungsaufwand für das Druckregelventil verringert, was vorteilhafterweise geringere Herstellungskosten bedeutet.

### Zeichnung

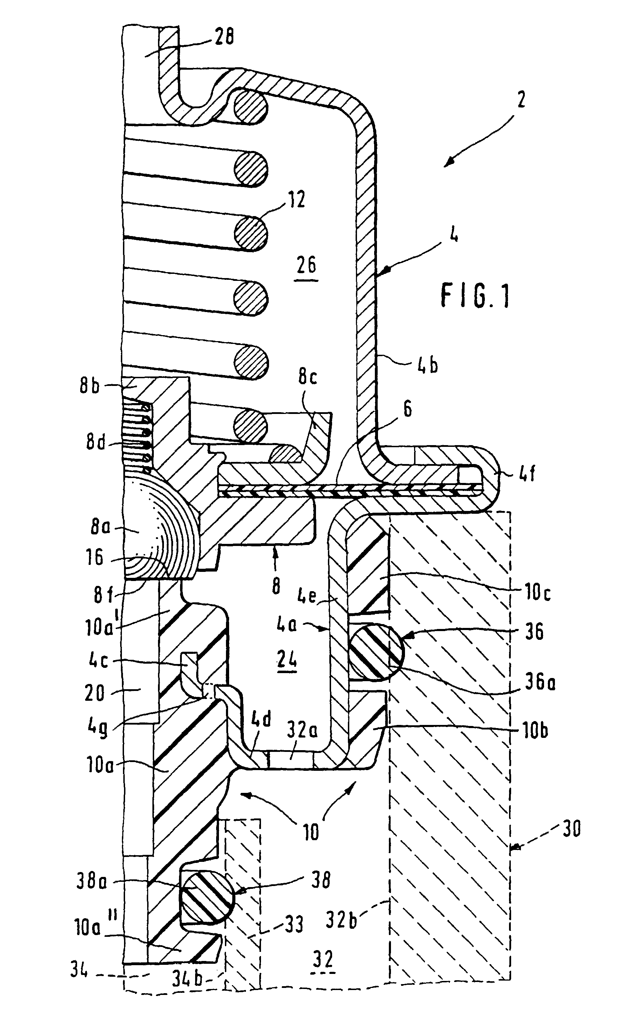

Bevorzugt ausgewählte, besonders vorteilhafte Ausführungsbeispiele der Erfindung sind in der Zeichnung vereinfacht dargestellt und in der nachfolgenden Beschreibung näher erläutert. Es zeigen die Figuren 1 bis 10 unterschiedlich ausgeführte Ausführungsbeispiele.

### Beschreibung der Ausführungsbeispiele

Das erfindungsgemäß ausgeführte Druckregelventil dient zum Regeln eines Drucks eines Kraftstoffs in einer Kraftstoffversorgungsanlage. Das Druckregelventil kann vorzugsweise bei Brennkraftmaschinen verwendet werden, bei denen in der Kraftstoffversorgungsanlage ein Druck des Kraftstoffs geregelt werden soll. Das Druckregelventil wird an einer geeigneten Stelle an einer an der Kraftstoffversorgungsanlage vorgesehenen Anbaustelle angebaut. Die Anbaustelle ist beispielsweise eine Öffnung in einem zu der Kraftstoffversorgungsanlage gehörenden Kraftstoffverteilrohr oder beispielsweise eine Öffnung in einem Gehäuse einer Kraftstoffpumpe der Kraftstoffversorgungsanlage. Durch die Kraftstoffversorgungsanlage gelangt Kraftstoff über eine Druckleitung zu der das Druckregelventil aufnehmenden Anbaustelle, und es führt eine Kraftstoffrückleitung überschüssigen Kraftstoff von der Anbaustelle zurück in einen Kraftstoffvorratsbehälter. Das Druckregelventil dient zum Regeln des Drucks in der Druckleitung.

Die **Figur 1** zeigt bei einem ersten Ausführungsbeispiel einen Halbschnitt entlang einer Symmetrieachse durch ein für die Beschreibung bevorzugt ausgewähltes, beispielhaft ausgeführtes, besonders vorteilhaftes Druckregelventil 2. Bei dem beispielhaft ausgewählten Druckregelventil 2 handelt es sich um ein im wesentlichen rotationssymmetrisches Gebilde. Um bei nicht zu großem Platzbedarf die Einzelheiten möglichst groß darstellen zu können, ist die für die Zeichnung ausgewählte Schnittebene durch das Druckregelventil 2 nur auf einer Seite der Symmetrieachse dargestellt.

Das Druckregelventil 2 umfaßt ein Ventilgehäuse 4, eine Membran 6, einen Schließkörper 8, ein Anschlagstück 10 und eine Schließfeder 12. Beim für die vorliegende Beschreibung bevorzugt ausgewählten Ausführungsbeispiel, ist das Ventilgehäuse 4 aus zwei Gehäuseteilen 4a und 4b zusammengesetzt. Das in der Zeichnung untere Gehäuseteil 4a wird nachfolgend als unteres Gehäuseteil 4a bezeichnet. Entsprechend soll nachfolgend das Gehäuseteil 4b als oberes Gehäuseteil 4b bezeichnet werden. Weil die Einbaulage des Druckregelventils 2 beliebig ist, kann sich das als unteres Gehäuseteil 4a bezeichnete Gehäuseteil 4a im eingebauten Zustand auch oberhalb des sogenannten oberen Gehäuseteils 4b befinden. Die Membran 6 ist zwischen dem unteren Gehäuseteil 4a und dem oberen Gehäuseteil 4b entlang ihres Umfangs abdichtend eingespannt.

Der Schließkörper 8 umfaßt beispielsweise ein abgeflachtes Kugelteil 8a, ein Halteelement 8b, einen Federteller 8c und eine Feder 8d. Die Membran 6 hat eine mittige Aussparung und ist am Umfang dieser Aussparung im Schließkörper 8 zwischen dem Halteelement 8b und dem Federteller 8c abdichtend eingespannt. An dem Kugelteil 8a gibt es eine ebene Fläche 8f.

Bei dem für die Figur 1 bevorzugt ausgewählten Ausführungsbeispiel umfaßt das Anschlagstück 10 einen an das untere Gehäuseteil 4a des Ventilgehäuses 4 angespritzten ersten Bereich 10a, einen an das untere Gehäuseteil 4a angespritzten zweiten Bereich 10b und einen an das untere Gehäuseteil 4a angespritzten dritten Bereich 10c. Der erste Bereich 10a wird nachfolgend als Düse 10a bezeichnet. Der zweite Bereich lOb wird nachfolgend als Stützscheibe lOb bezeichnet, und der dritte Bereich 10c erhält die Bezeichnung Stützring 10c. Diese Bezeichnungen für die verschiedenen Bereiche des Anschlagstücks 10 werden, um die vorliegende Beschreibung möglichst anschaulich gestalten zu können, auch bei den anderen in den weiteren Figuren dargestellten Ausführungsbeispielen beibehalten, obwohl bei einigen der Ausführungsbeispiele die Übergänge zwischen den Bereichen 10a, 10b und 10c fließend sind und bei einigen der ausgewählten Ausführungsbeispiele nicht scharf zwischen der Düse 10a, der Stützscheibe 10b und dem Stützring 10c unterschieden werden kann.

Die angespritzte Düse 10a des Anschlagstücks 10 hat eine dem Schließkörper 8 zugewandte innere Seite 10a', an der sich ein Ventilsitz 16 befindet, und die Düse 10a hat eine dem Schließkörper 8 abgewandte äußere Seite 10a". Durch die Düse 10a verläuft eine abgestuft ausgeführte Anschlußöffnung. Die Anschlußöffnung entstand durch entsprechende Formgebung der zum Spritzen bzw. Gießen der Düse 10a verwendeten Spritzgießform. Die Anschlußöffnung kann aber auch gebohrt sein. Die Anschlußöffnung dient als Kraftstoffrücklauf 20. Der Kraftstoffrücklauf 20 führt von der inneren Seite 10a' zu der äußeren Seite 10a", d. h. vom Ventilsitz 16 zu einer Kraftstoffrückleitung 34.

Die Membran 6 trennt einen Kraftstoffraum 24 von einer Ventilkammer 26. Die Ventilkammer 26 ist über einen Anschluß 28 über eine nicht dargestellte Leitung beispielsweise mit einem nicht dargestellten Saugrohr der nicht dargestellten Brennkraftmaschine verbunden.

Das Druckregelventil 2 gehört zu einer Kraftstoffversorgungsanlage 30. Von der Kraftstoffversorgungsanlage 30 ist in der Zeichnung nur ein Teilbereich dargestellt. Der dargestellte Teilbereich der Kraftstoffversorgungsanlage 30 ist in einem Teil der Figuren der besseren Übersichtlichkeit wegen gestrichelt wiedergegeben. In der Kraftstoffversorgungsanlage 30 gibt es eine als eine Druckleitung 32 dienende Bohrung. Die Bohrung der Druckleitung 32 hat einen Durchmesser 32b. Ein Hülsenansatz 33 in der Bohrung der Druckleitung 32 der Kraftstoffversorgungsanlage 30 bildet den Anfang der Kraftstoffrückleitung 34. Mit anderen Worten, das Bezugszeichen 33 verdeutlicht einen Rücklaufstutzen. Der Hülsenansatz 33 der Kraftstoffrückleitung 34 hat innen einen Durchmesser 34b. Eine nicht dargestellte elektrisch angetriebene Kraftstoffpumpe fördert Kraftstoff aus einem nicht dargestellten Kraftstoffvorratsbehälter in die Druckleitung 32. Von der Brennkraftmaschine nicht benötigter Kraftstoff strömt von der Druckleitung 32 durch das Druckregelventil 2 zur Kraftstoffrückleitung 34 und von dort zu dem Kraftstoffvorratsbehälter.

Das untere Gehäuseteil 4a ist vorzugsweise ein aus einem Blech ausgestanztes Blechformteil, das durch Stanzen und Prägen seine Form erhalten hat. Das Gehäuseteil 4a kann somit als Tiefziehbecher bezeichnet werden. Das Gehäuseteil 4a kann aber auch beispielsweise ein durch spanabhebende Bearbeitung entstandenes Drehteil sein. Das in der Figur 1 beispielhaft dargestellte, mit einer bevorzugt ausgewählten Formgebung versehene untere Gehäuseteil 4a kann gedanklich in verschiedene Bereiche aufgeteilt werden. Das untere Gehäuseteil 4a hat beispielsweise einen inneren Bereich 4c, einen radial verlaufenden Zwischenbereich 4d, einen zylindrisch oder leicht kegelig verlaufenden Zwischenbereich 4e und einen äußeren Bereich 4f.

Der äußere Bereich 4f ist umgebördelt. Durch diese dadurch entstandene Bördelung werden die beiden Gehäuseteile 4a und 4b miteinander fest verbunden und die Membran 6 wird zwischen den beiden Gehäuseteilen 4a und 4b an ihrem Außenumfang fest eingespannt. Der äußere Bereich 4f dient auch zur axialen räumlichen Festlegung des Druckregelventils 2 gegenüber der Kraftstoffversorgungsanlage 30.

Die Figur 1 zeigt eine durch den Zwischenbereich 4d des Ventilgehäuses 4 führende Öffnung. Die Öffnung dient als Kraftstoffzulauf 32a. Der Kraftstoffzulauf 32a verbindet die Druckleitung 32 der Kraftstoffversorgungsanlage 30 mit dem Kraftstoffraum 24.

Die Schließfeder 12 und/oder ein Druck in der Ventilkammer 26 beaufschlagt die an dem Schließkörper 8 vorgesehene Fläche 8f gegen den Ventilsitz 16. Ist der Druck des Kraftstoffs in der Druckleitung 32, d. h. der Druck des Kraftstoffs in dem Kraftstoffraum 24, unterhalb eines bestimmten Wertes, dann liegt das Kugelteil 8a auf dem Ventilsitz 16, und es gibt keine Verbindung für den Kraftstoff vom Kraftstoffraum 24 zu dem Kraftstoffrücklauf 20. Wenn der Druck des Kraftstoffs in dem Kraftstoffraum 24 größer ist als ein bestimmter Wert, dann hebt der Schließkörper 8 vom Ventilsitz 16 ab und der Kraftstoff kann aus der Druckleitung 32 der Kraftstoffversorgungsanlage 30, durch den Kraftstoffzulauf 32a, durch den Kraftstoffraum 24, durch den Spalt zwischen dem Schließkörper 8 und dem Ventilsitz 16, durch den Kraftstoffrücklauf 20 in die Kraftstoffrückleitung 34 der Kraftstoffversorgungsanlage 30 gelangen.

Die Stützscheibe 10b und der Stützring 10c des Anschlagstücks 10 sind im Zwischenbereich 4e an das untere Gehäuseteil 4a angespritzt und durch dieses Anspritzen auf einfache Weise fest mit dem unteren Gehäuseteil 4a verbunden. Die Stützscheibe 10b hat an ihrem Außenumfang eine Abschrägung, die zum leichteren Einschieben des Druckregelventils 2 in den Durchmesser 32b der Druckleitung 32 der Kraftstoffversorgungsanlage 30 dient. Die Stützscheibe 10b und der Stützring 10c dienen zur räumlichen Festlegung des Druckregelventils 2 gegenüber der Kraftstoffversorgungsanlage 30 und halten nach der Montage des Druckregelventils 2 an die Kraftstoffversorgungsanlage 30 das Druckregelventil 2 in radialer Richtung in der vorgesehenen Position.

Zur Abdichtung der Druckleitung 32 gegen die Umgebung ist eine zwischen dem Ventilgehäuse 4 und der Kraftstoffversorgungsanlage 30 abdichtende Gehäusedichtstelle 36 vorgesehen. Die Gehäusedichtstelle 36 sorgt dafür, daß kein Kraftstoff aus der Druckleitung 32 in die Umgebung gelangen kann. Bei dem in der Figur 1 dargestellten Ausführungsbeispiel umfaßt die Gehäusedichtstelle 36 ein eingelegtes Dichtelement 36a. Das Dichtelement 36a ist vorzugsweise ein in eine zwischen der angespritzten Stützscheibe 10b und dem angespritzten Stützring 10c vorgesehene Umfangsnut eingelegter O-Ring. Ist das Druckregelventil 2 an die Kraftstoffversorgungsanlage 30 montiert, dann drückt das Dichtelement 36a radial nach außen gegen den Durchmesser 32b der Druckleitung 32, in die das untere Gehäuseteil 4a des Druckregelventils 2 eingebaut ist.

Zur Abdichtung zwischen dem Ventilgehäuse 4 und der Kraftstoffversorgungsanlage 30 ist eine Dichtstelle 38 vorgesehen. Die Dichtstelle 38 verhindert ein ungewolltes Strömen bzw. Lecken des Kraftstoffs aus der Druckleitung 32 in die Kraftstoffrückleitung 34. Mit anderen Worten, die Dichtstelle 38 dient zum Abdichten zwischen dem Kraftstoffzulauf und dem Kraftstoffrücklauf. Beim dargestellten Ausführungsbeispiel umfaßt die Dichtstelle 38 ein Dichtelement 38a, wobei das Dichtelement 38a ein in eine am Außenumfang der Düse 10a vorgesehene Nut eingelegter O-Ring ist. Das Dichtelement 38a ist elastisch und drückt in radialer Richtung gegen die Nut an der Düse 10a und gegen den Durchmesser 34b des Hülsenansatzes 33.

Wie der dargestellte Längsschnitt durch das Druckregelventil 2 zeigt, ist das untere Gehäuseteil 4a im Bereich des inneren Bereichs 4c mehrfach abgewinkelt. Die Düse 10a besteht aus einem steifen Kunststoff oder aus Gummi oder einem sonstigen spritz- bzw. gießbaren Material und ist an den inneren Bereich 4c des unteren Gehäuseteils 4a des Ventilgehäuses 4 angespritzt. Durch die mehrfache Abwinklung des inneren Bereichs 4c ergibt sich eine intensive, den Halt zwischen der Düse 10a und dem unteren Gehäuseteil 4a unterstützende Verbindung zwischen der angespritzten Düse 10a und dem Gehäuseteil 4a. Damit die angespritzte Düse 10a besonders stabil mit dem Gehäuseteil 4a verbunden ist und zur Erleichterung des Anspritzens der Düse 10a, ist am inneren Bereich 4c des Gehäuseteils 4a eine Bohrung 4g vorgesehen. Je nach Formgebung des Gehäuseteils 4a kann auch auf die Bohrung 4g verzichtet werden. Es können auch mehrere Bohrungen 4g vorgesehen sein.

Für die Stützscheibe 10b und für den Stützring 10c wird vorzugsweise dasselbe Material wie für die Düse 10a verwendet. Mit anderen Worten, das gesamte Anschlagstück 10 besteht aus einem spritz- bzw. gießbaren Material.

Auch wenn, wie in der Figur 1 beispielhaft dargestellt, die Düse 10a, die Stützscheibe 10b und der Stützring 10c getrennt voneinander mit dem Gehäuseteil 4a verbunden sind, so kann trotzdem das Werkzeug zum Spritzen dieser Teile so geformt sein, daß die Düse 10a, die Stützscheibe 10b und der Stützring 10c zusammen in einem gemeinsamen Spritzvorgang hergestellt werden.

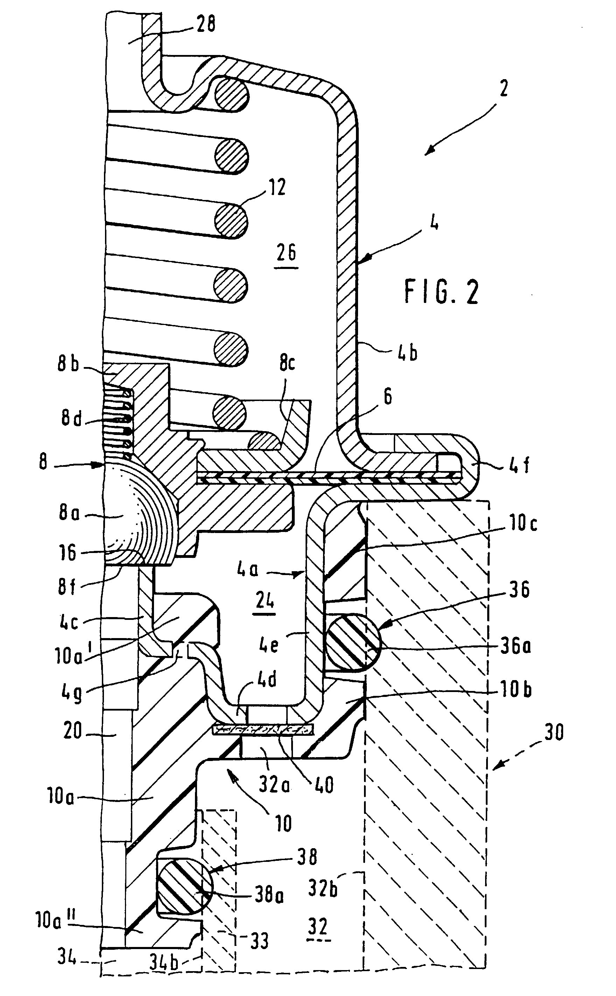

Die **Figur 2** zeigt ein weiteres, ausgewähltes, besonders vorteilhaftes Ausführungsbeispiel.

In allen Figuren sind gleiche oder gleichwirkende Teile mit denselben Bezugszeichen versehen. Sofern nichts Gegenteiliges erwähnt bzw. in der Zeichnung dargestellt ist, gilt das anhand eines der Figuren Erwähnte und Dargestellte auch bei den anderen Ausführungsbeispielen. Sofern sich aus den Erläuterungen nichts anderes ergibt, sind die Einzelheiten der verschiedenen Ausführungsbeispiele miteinander kombinierbar.

Bei dem in der Figur 2 dargestellten Ausführungsbeispiel erstreckt sich die Düse 10a des Anschlagstücks 10, dem Zwischenbereich 4d entlang, bis zur Stützscheibe 10b des Anschlagstücks 10. Die Düse 10a und die Stützscheibe 10b hängen materialmäßig unmittelbar zusammen.

Der Kraftstoffzulauf 32a führt von der Druckleitung 32 durch das Anschlagstück 10 und durch das untere Gehäuseteil 4a in den Kraftstoffraum 24. Im Verlauf des Kraftstoffzulaufs 32a ist, an der Stelle an der das angespritzte Anschlagstück 10 am Gehäuseteil 4a anliegt, ein Filter 40 vorgesehen. Der Filter 40 ist in das Anschlagstück 10 eingespritzt. Der Filter 40 verhindert ein Eindringen von Schmutzpartikeln in den Kraftstoffraum 24. Der Filter 40 kann vor einem Anspritzen des Anschlagstücks 10 in die für das Anspritzen des Anschlagstücks 10 an das Gehäuseteil 4a vorgesehene Gießform eingelegt werden. Nach dem Anspritzen des Anschlagstücks 10 an das Gehäuseteil 4a ist der Filter 40 unverlierbar mit dem Gehäuseteil 4a verbunden. Dadurch führt der Filter 40 bei einem nachfolgenden Zusammenbau des Druckregelventils 2 vorteilhafterweise zu keinem zusätzlichen Montageaufwand.

Bei dem in der Figur 2 dargestellten Ausführungsbeispiel ist der innere Bereich 4c des Gehäuseteils 4a in axialer Richtung über die innere Seite 10a' der Düse 10a hinaus in Richtung gegen den Schließkörper 8 verlängert. An dem dem Schließkörper 8 zugewandten stirnseitigen Ende des inneren Bereichs 4c des Gehäuseteils 4a wird der Ventilsitz 16 gebildet. Ist der Druck in dem Kraftstoffraum 24 unterhalb eines bestimmten Wertes, dann liegt der Schließkörper 8 mit dem Kugelteil 8a an dem am Gehäuseteil 4a vorgesehenen Ventilsitz 16 an. Weil, wie bereits erwähnt, bei der bevorzugten Ausführung des Druckregelventils 2 das Gehäuseteil 4a ein Blechformteil ist, befindet sich der Ventilsitz 16 somit direkt an dem das Ventilgehäuse 4 bildenden Blechformteil.

Ausgehend vom Ventilsitz 16 verläuft der Kraftstoffrücklauf 20 zunächst zwischen dem inneren Bereich 4c des Gehäuseteils 4a und dann durch die Düse 10a bis zur äußeren Seite 10a''.

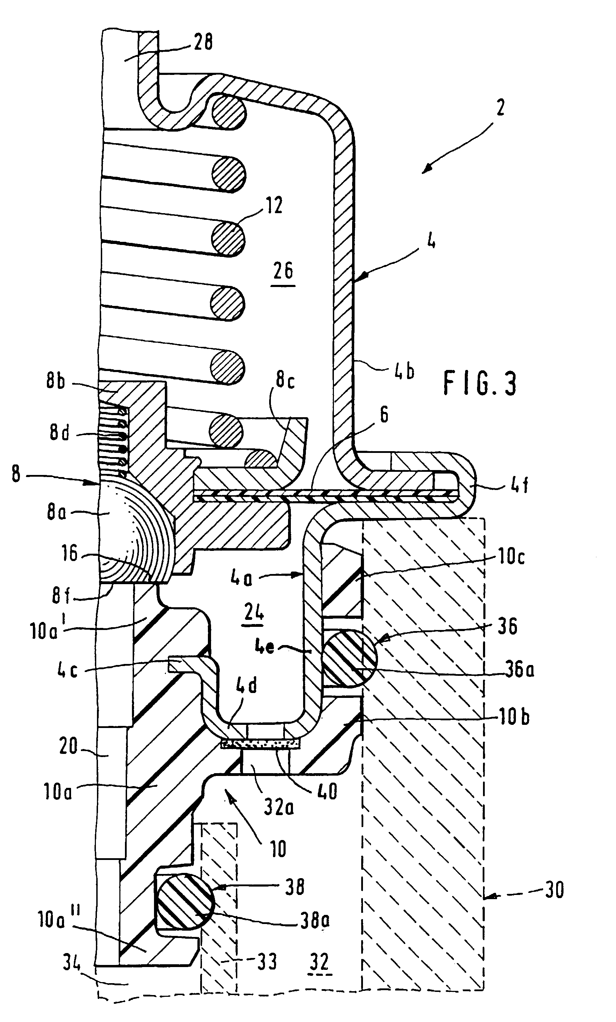

Die **Figur 3** zeigt ein weiteres, bevorzugt ausgewähltes Ausführungsbeispiel.

Im Unterschied zu dem in der Figur 2 dargestellten Ausführungsbeispiel befindet sich der Ventilsitz 16 nicht unmittelbar am Material des Gehäuseteils 4a, sondern der Ventilsitz 16 befindet sich an der dem Schließkörper 8 zugewandten inneren Seite 10a' der an das Gehäuseteil 4a angespritzten Düse 10a. Über die Düse 10a des Anschlagstücks 10 ist der Ventilsitz 16 mit dem Ventilgehäuse 4 fest verbunden.

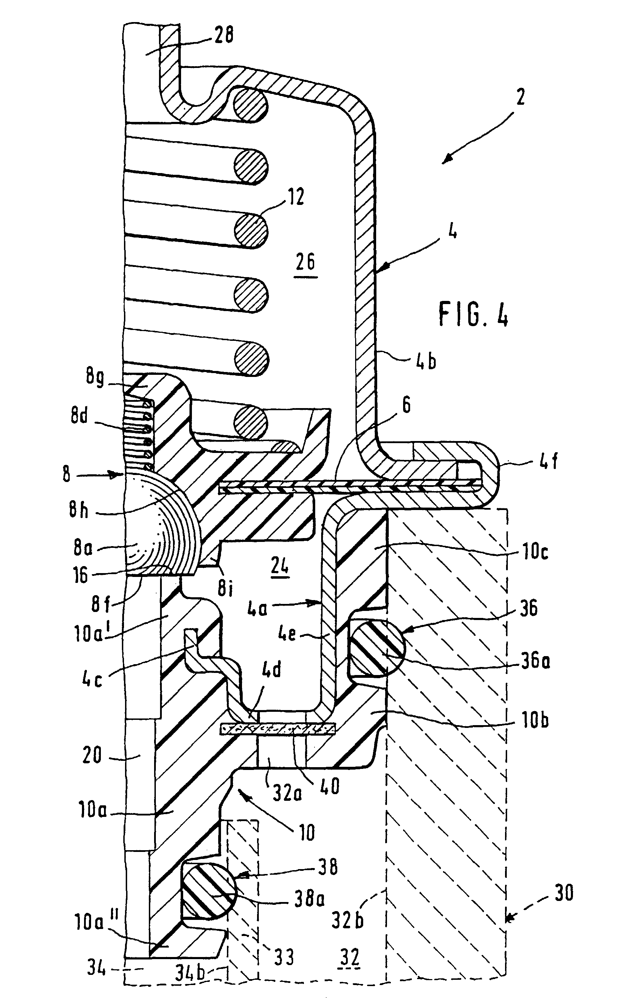

Die **Figur 4** zeigt ein weiteres, bevorzugt ausgewähltes Ausführungsbeispiel.

Bei dem in der Figur 4 dargestellten Ausführungsbeispiel sind die Stützscheibe 10b und der Stützring 10c materialmäßig direkt miteinander verbunden. Die Stützscheibe 10b und der Stützring 10c gehen unmittelbar ineinander über, wenn man von der Nut für das Dichtelement 36a absieht. Im Unterschied dazu sind in der Figur 1 die Stützscheibe 10b und der Stützring 10c materialmäßig getrennt voneinander an das Gehäuseteil 4a angespritzt. Auch bei der Figur 1 kann das Anspritzen der Stützscheibe 10b und des Stützrings 10c zusammen mit der Düse 10a gleichzeitig in einem gemeinsamen Spritzvorgang geschehen. Das Ausführungsbeispiel nach der Figur 1 hat den Vorteil, daß der benötigte Einbauraum für das Druckregelventil 2 geringer sein kann, und, je nach Verfahren zum Herstellen des Anschlagstücks 10, bietet das Ausführungsbeispiel nach Figur 4 Vorteile beim Spritzen des Anschlagstücks 10 an das Gehäuseteil 4a.

Bei dem in der Figur 4 dargestellten Ausführungsbeispiel besteht der Schließkörper 8 im wesentlichen aus dem Kugelteil 8a, der Feder 8d und einem Formteil 8g.

Das Formteil 8g besteht aus gegossenem bzw. gespritztem Kunststoff. Für das Formteil 8g und für das Anschlagstück 10 kann derselbe Grundwerkstoff verwendet werden. Vor dem Spritzen bzw. Gießen des Formteils 8g wird die Membran 6 in die Form zur Herstellung des Formteils 8g eingelegt. Dadurch wird der Innenumfang der Membran 6 fest und dicht mit dem Schließkörper 8 verbunden.

Das Formteil 8g hat eine sphärisch geformte Kugelaufnahme 8h. Auf der dem Kraftstoffraum 24 zugewandten Seite des Formteils 8g umgibt ein Rand 8i die Kugelaufnahme 8h. In der Kugelaufnahme 8h befindet sich über die Hälfte des Kugelteils 8a, mit anderen Worten, der innere Durchmesser des Rands 8i ist kleiner als der Durchmesser des Kugelteils 8a, so daß das Kugelteil 8a vom Rand 8i gehalten wird. Dazu wird der Rand 8i beispielsweise nach dem Einbau des Kugelteils 8a durch Warmumformung etwas nach innen gebogen.

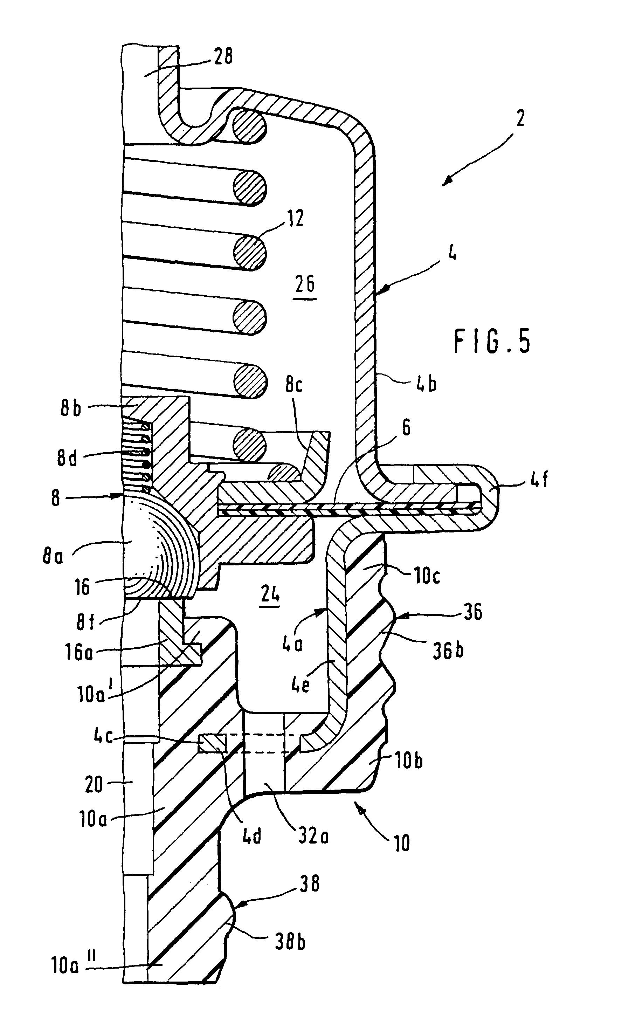

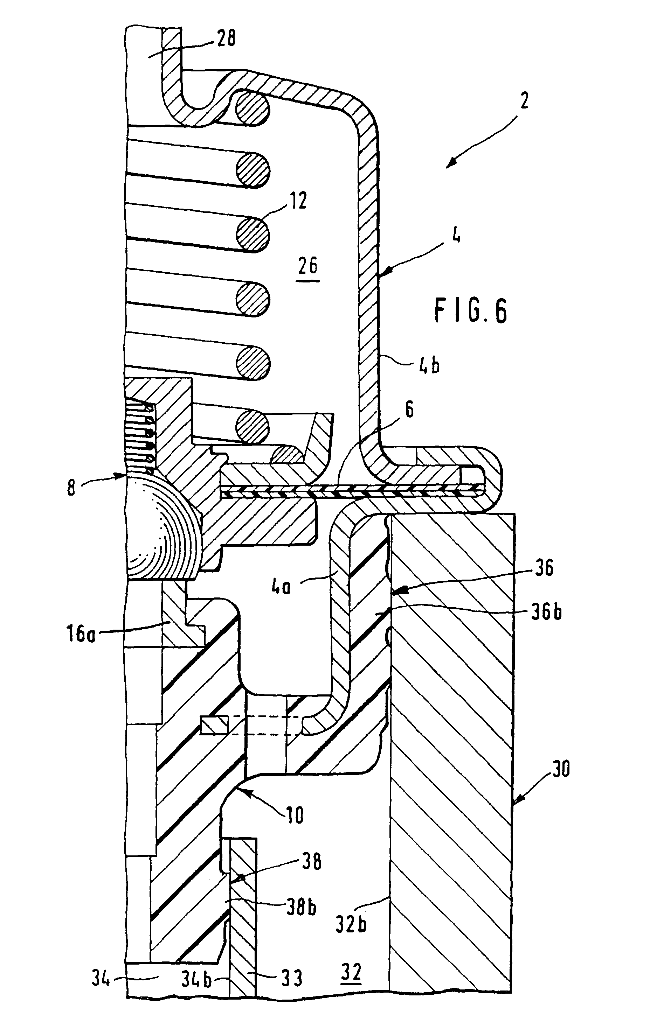

Die **Figuren 5 und 6** zeigen ein weiteres ausgewähltes Ausführungsbeispiel.

Die Figur 5 zeigt das Druckregelventil 2 vor einem Anbau an die Kraftstoffversorgungsanlage 30. Die Figur 6 zeigt das Druckregelventil 2 und einen Teilbereich der Kraftstoffversorgungsanlage 30 nach dem Anbau des Druckregelventils 2 an die Kraftstoffversorgungsanlage 30.

Am Außenumfang des Anschlagstücks 10, im Bereich der Stützscheibe 10b bzw. des Stützrings 10c ist eine umlaufende, radial nach außen vorstehende wellenförmige Erhebung vorgesehen. Diese Erhebung gehört zur Gehäusedichtstelle 36 und bildet eine an das Anschlagstück 10 spritztechnisch angeformte Dichtung 36b.

Im Bereich der Dichtstelle 38 ist an den Außendurchmesser der Düse 10a des Anschlagstücks 10 eine umlaufende radial nach außen vorstehende wellenförmige Erhebung über das angespritzte Anschlagstück 10 an das Gehäuseteil 4a des Ventilgehäuses 4 angeformt. Die Erhebung bildet eine angeformte Dichtung 38b.

Wie das Ausführungsbeispiel nach der Figur 5 zeigt, ist im Bereich der Gehäusedichtstelle 36 parallel zur angeformten umlaufenden Dichtung 36b eine weitere umlaufende, eine zusätzliche Dichtung bildende Erhebung angeformt. In Abwandlung zum dargestellten Ausführungsbeispiel kann auch im Bereich der Dichtstelle 38 parallel zur Dichtung 38b eine weitere wellenförmig radial nach außen hervorstehende, gußtechnisch hergestellte Dichtung vorgesehen sein und/oder es kann auf die weitere umlaufende Erhebung im Bereich der Gehäusedichtstelle 36 verzichtet werden. Bei beiden Dichtstellen 36 und 38 sind auch mehr als zwei umlaufende Erhebungen möglich. Der Durchmesser der angeformten Dichtung 36b und der Durchmesser der Dichtung 38b sind größer als der Durchmesser 32b bzw. der Durchmesser 34b der Druckleitung 32 bzw. der Kraftstoffrückleitung 34. Dadurch werden bei bzw. nach der Montage des Druckregelventils 2 an die Kraftstoffversorgungsanlage 30 die Dichtung 36b und die Dichtung 38b elastisch radial nach innen gedrückt. Dieser Zustand ist in der Figur 6 dargestellt. Neben der Dichtung 36b bzw. neben der Dichtung 38b gibt es noch Vertiefungen (Fig. 5). Diese Vertiefungen dienen als Volumenausgleich bei der Montage des Druckregelventils 2 an die Kraftstoffversorgungsanlage 30.

Je nach Herstellungsverfahren der Kraftstoffversorgungsanlage 30 können gewisse Maßtoleranzen der Kraftstoffversorgungsanlage 30 und in radialer Richtung Fehler bei der Konzentrizität zwischen dem Durchmesser 32b und dem Durchmesser 34b nicht vollständig ausgeschlossen werden. Weil das an das Ventilgehäuse 4 angespritzte Anschlagstück 10 aus nicht zu hartem, elastisch federndem bzw. plastisch etwas nachgebendem Kunststoff besteht, können auch relativ große Maßtoleranzen der Kraftstoffversorgungsanlage 30 und relativ große Konzentrizitätsfehler der beiden Durchmesser 32b und 34b durch eine entsprechende nachgebende Verformung des Anschlagstücks 10 leicht ausgeglichen werden, ohne daß es zu Undichtheiten zwischen der Druckleitung 32 und der Umgebung bzw. zwischen der Druckleitung 32 und der Kraftstoffrückleitung 34 kommt. Dies verringert die Anforderungen an die einzuhaltenden Toleranzen bei der Kraftstoffversorgungsanlage 30, und es wird dadurch das Ersetzen des separaten Dichtelements 36a und des separaten Dichtelements 38a (Fig. 1) durch die angeformte Dichtung 36b bzw. 38b (Fig. 5) erleichtert. Desweiteren wird durch das Anformen der Dichtung 36b und/oder der Dichtung 38b die Anzahl der bei der Montage des Druckregelventils 2 zusammenzubauenden Einzelteile vorteilhafterweise wesentlich verringert.

Wie die Figur 5 zeigt, ist im Bereich der dem Schließkörper 8 zugewandten inneren Seite 10a' der Düse 10a ein Ventilsitzeinsatz 16a mit der Düse 10a des Anschlagstücks 10 verbunden. Der Ventilsitzeinsatz 16a hat beispielsweise die Form eines abgestuft gestalteten Ringes. Der Ventilsitzeinsatz 16a kann beim gußtechnischen bzw. spritztechnischen Herstellen des Anschlagstücks 10 in das Anschlagstück 10 eingegossen bzw. eingespritzt werden. Der Ventilsitzeinsatz 16a besteht beispielsweise aus Metall, Kunststoff oder aus Gummi und ist in seiner Härte auf das Kugelteil 8a des Schließkörpers 8 so abgestimmt, daß sich eine gute Dichtheit und eine gute Dauerhaltbarkeit des Ventilsitzes 16 und des Kugelteils 8a ergeben.

Wie die Figur 5 zeigt, ist der Durchmesser der Kraftstoffzulauf 32a kleiner als der im Zwischenbereich 4d des Gehäuseteils 4a vorgesehene Durchbruch, so daß das Anschlagstück 10 in sich ausreichend verbunden ist und gußtechnisch bzw. spritztechnisch einfach hergestellt werden kann.

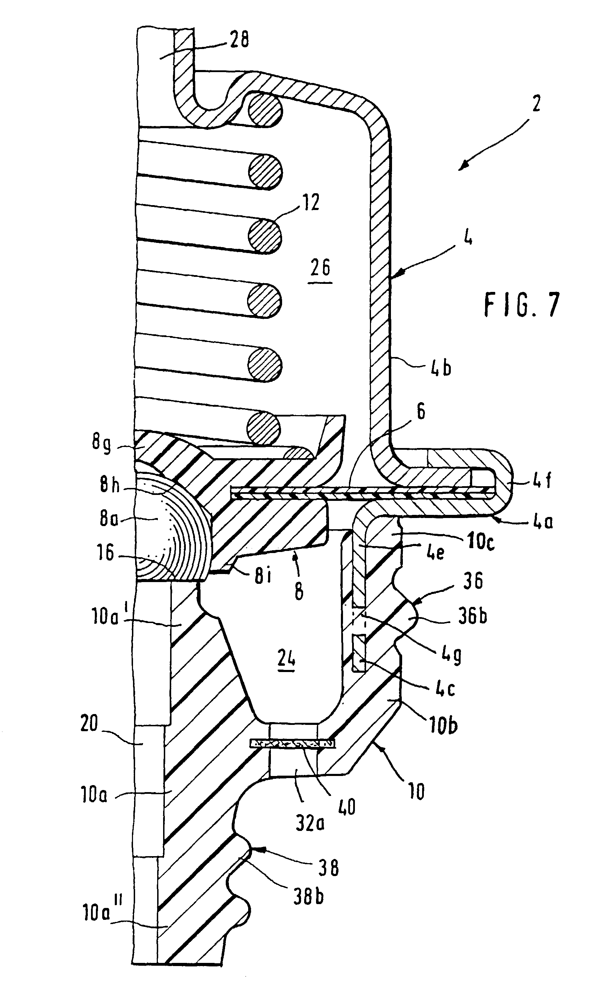

Die **Figur 7** zeigt ein weiteres, bevorzugt ausgewähltes Ausführungsbeispiel.

Wie die Figur 7 zeigt, kann das Anschlagstück 10 als zusammenhängendes Bauteil an das Gehäuseteil 4a angegossen bzw. angespritzt sein, so daß das Gehäuseteil 4a selbst relativ klein gehalten werden kann. Dadurch ist das Gehäuseteil 4a leicht herstellbar, und es sind wenig Umformvorgänge zur Herstellung des Gehäuseteils 4a erforderlich.

Zur Verbesserung des Zusammenhalts zwischen dem Gehäuseteil 4a und dem Anschlagstück 10 ist in dem unteren Gehäuseteil 4a die Bohrung 4g vorgesehen. Das angespritzte Anschlagstück 10 durchgreift die Bohrung 4g.

Weil das Kugelteil 8a infolge der Elastizität des Rands 8i in der Kugelaufnahme 8h von dem Formteil 8g federnd gehalten wird, kann, wie die Figur 7 zeigt, auf die in der Figur 4 gezeigte Feder 8d verzichtet werden. Dadurch ergibt sich eine weitere Reduzierung der benötigten Bauteile.

Wie insbesondere die Figur 7 zeigt, kann das Anschlagstück 10 materialmäßig zusammenhängend an das Gehäuseteil 4a angegossen bzw. angespritzt sein. Es ist aber auch möglich, beispielsweise den Stützring 10c unabhängig von den übrigen Bereichen des Anschlagstücks 10 separat an das Gehäuseteil 4a anzuspritzen (Fig. 3). Es gibt daneben auch die Möglichkeit, die Düse 10a, die Stützscheibe 10b und den Stützring 10c je unabhängig voneinander separat an das Gehäuseteil 4a anzuspritzen (Fig. 1). Es sei noch erwähnt, daß es auch möglich ist, beispielsweise nur die Düse 10a an das Gehäuseteil 4a anzuspritzen und die Stützscheibe 10b und den Stützring 10c als separat hergestelltes Bauteil montagemäßig mit dem Ventilgehäuse 4 zu verbinden. Daneben gibt es die weitere Möglichkeit, beispielsweise nur den Stützring 10c an das Gehäuseteil 4a anzuspritzen und die Stützscheibe 10b und die Düse 10a als separat hergestellte Bauteile montagemäßig mit dem Ventilgehäuse 4 zu verbinden. Als weitere Möglichkeit sei noch darauf hingewiesen, daß beispielsweise auch nur die Stützscheibe 10b an das Gehäuseteil 4a angespritzt werden kann und die Düse 10a und der Stützring 10c werden als separat hergestellte Bauteile montagemäßig mit dem Ventilgehäuse 4 verbunden.

Es sei darauf hingewiesen, daß das Druckregelventil auch dann gegenüber dem bekannten Stand der Technik erhebliche Vorteile bietet, wenn nicht das Anschlagstück 10 sondern nur der Schließkörper 8 gießtechnisch bzw. spritztechnisch als Kunststoffteil mit der Membran 6 verbunden wird. Auch dadurch erhält man bereits eine wesentliche Vereinfachung beim Montageaufwand des Druckregelventils 2.

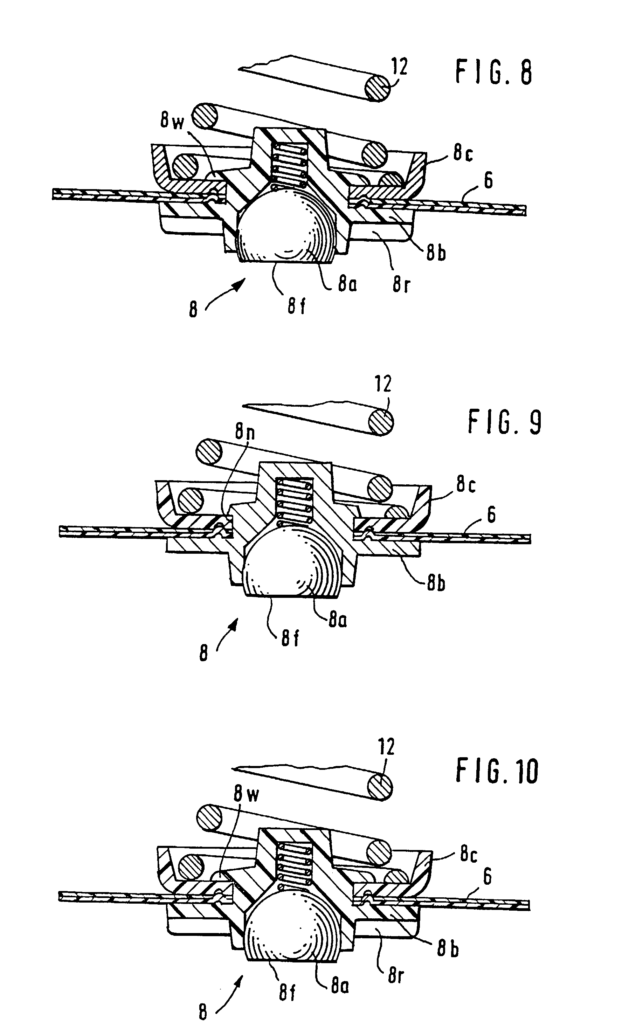

Die **Figur 8** zeigt einen Ausschnitt aus einem weiteren, bevorzugt ausgewähltes Ausführungsbeispiel.

Eine Verbesserung gegenüber den bisher bekannten Druckregelventilen ergibt sich auch, wenn, wie in der Figur 8 dargestellt, der Federteller 8c aus Metall gefertigt wird, und das Halteelement 8b des Schließkörpers 8 wird als gespritztes Formteil aus Kunststoff gefertigt. Die Membran 6 und der Federteller 8c haben Innenbohrungen, und das Halteelement 8b hat einen Absatz. Nach dem Zusammenfügen der Membran 6, dem Halteelement 8b und dem Federteller 8c, d. h. nachdem der Absatz des Halteelements 8b in die Innenbohrungen der Membran 6 und des Federtellers 8c gesteckt wurde, wird der durchragende Absatz des Halteelements 8b durch Warmverprägung so umgeformt, daß am Halteelement 8b ein Wulst 8w entsteht, was eine feste Verbindung zwischen der Membran 6, dem Halteelement 8b und dem Federteller 8c ergibt.

Durch Anformen einer radial verlaufenden Verstärkungsrippe 8r oder mehrerer Verstärkungsrippen 8r am Halteelement 8b kann die Festigkeit des Schließkörpers 8 bei geringem Materialeinsatz verbessert werden. Die mindestens eine Verstärkungsrippe 8r ist am Halteelement 8b auf der der Membran 6 abgewandten Stirnseite vorgesehen.

Die **Figur 9** zeigt ausschnittsweise ein weiteres, bevorzugt ausgewähltes Ausführungsbeispiel.

Bei dem in der Figur 9 gezeigten Ausführungsbeispiel besteht das Halteelement 8b aus Metall, und der Federteller 8c ist aus Kunststoff gefertigt.

Wie die Figur 9 zeigt, ist am Halteelement 8b eine umlaufende Nut 8n vorgesehen. In die Nut 8n kann der Federteller 8c einrasten. Dadurch entsteht eine feste Verbindung zwischen dem Federteller 8c und dem Halteelement 8b. Weil der Federteller 8c aus etwas nachgiebigem Kunststoff besteht, wird das Einrasten des Federtellers 8c in die Nut 8n ermöglicht. Nach dem Einrasten des Federtellers 8c in die umlaufende Nut 8n ist der innere Durchmesser der Membran 6 zwischen dem Halteelement 8b und dem Federteller 8c fest eingespannt.

Die **Figur 10** zeigt eine weitere Abwandlung des erfindungsgemäßen Druckregelventils 2.

Bei dem in der Figur 10 dargestellten Ausführungsbeispiel besteht das Halteelement 8b und der Federteller 8c aus Kunststoff, wobei das Halteelement 8b und der Federteller 8c wie anhand der Figur 8 beispielhaft erläutert, verbunden sind.

## Patentansprüche

1. Druckregelventil (2) zum Anbauen an eine Kraftstoffversorgungsanlage, insbesondere eine Kraftstoffversorgungsanlage einer Brennkraftmaschine, mit einem einen Kraftstoffraum (24) umschließenden, mindestens ein Gehäuseteil (4a, 4b) umfassenden Ventilgehäuse (4), mit einem Kraftstoffzulauf (32a), vorgesehen zum Zuführen von Kraftstoff in den Kraftstoffraum (24) und mit einem Kraftstoffrücklauf (20), vorgesehen zum Abführen von Kraftstoff aus dem Kraftstoffraum (24), wobei mit dem Gehäuseteil (4a, 4b) mindestens ein zur Kopplung des Druckregelventils (2) mit der Kraftstoffversorgungsanlage (30) mindestens teilweise beitragendes Anschlagstück (10) verbunden ist, dadurch gekennzeichnet, daß das mindestens eine Anschlagstück (10) an das mindestens eine Gehäuseteil (4a, 4b) angespritzt ist.

2. Druckregelventil (2) nach Anspruch 1, dadurch gekennzeichnet, daß durch das angespritzte Anschlagstück (10) der Kraftstoffrücklauf (20) geführt ist.

3. Druckregelventil (2) nach Anspruch 1 oder 2, dadurch gekennzeichnet, daß in dem Ventilgehäuse (4) ein von einer Schließkraft (12) gegen einen Ventilsitz (16) beaufschlagter Schließkörper (8) vorgesehen ist, wobei der Ventilsitz (16) an dem angespritzten Anschlagstück (10) vorgesehen ist.

4. Druckregelventil (2) nach Anspruch 1 oder 2, dadurch gekennzeichnet, daß in dem Ventilgehäuse (4) ein von einer Schließkraft (12) gegen einen Ventilsitz (16) beaufschlagter Schließkörper (8) vorgesehen ist, wobei der Ventilsitz (16) an dem Gehäuseteil (4a, 4b) vorgesehen ist.

5. Druckregelventil (2) nach einem der Ansprüche 1 bis 4, dadurch gekennzeichnet, daß an dem angespritzten Anschlagstück (10) eine Dichtstelle (38) zum Abdichten zwischen dem Kraftstoffzulauf (32a) und dem Kraftstoffrücklauf (20) vorgesehen ist.

6. Druckregelventil (2) nach Anspruch 5, dadurch gekennzeichnet, daß an der Dichtstelle (38) ein erstes Dichtelement (38a) vorgesehen ist.

7. Druckregelventil (2) nach Anspruch 5, dadurch gekennzeichnet, daß im Bereich der Dichtstelle (38) eine Dichtung (38b) an das Anschlagstück (10) angeformt ist.

8. Druckregelventil (2) nach einem der Ansprüche 1 bis 7, dadurch gekennzeichnet, daß an dem angespritzten Anschlagstück (10) eine Gehäusedichtstelle (36) zum Abdichten zwischen dem Kraftstoffzulauf (32a) und einer Umgebung vorgesehen ist.

9. Druckregelventil (2) nach Anspruch 8, dadurch gekennzeichnet, daß an der Gehäusedichtstelle (36) ein zweites Dichtelement (36a) vorgesehen ist.

10. Druckregelventil (2) nach Anspruch 8, dadurch gekennzeichnet, daß im Bereich der Gehäusedichtstelle (36) eine Gehäusedichtung (36b) an das Anschlagstück (10) angeformt ist.

11. Druckregelventil (2) nach einem der vorhergehenden Ansprüche, dadurch gekennzeichnet, daß das angespritzte Anschlagstück (10) einstückig zusammenhängend ausgeführt ist.

12. Druckregelventil (2) nach Anspruch 1 oder 2, dadurch gekennzeichnet, daß in dem Ventilgehäuse (4) eine eine Ventilkammer (26) von dem Kraftstoffraum (24) trennende Membran (6) und ein an die Membran (6) angespritzter, von einer Schließkraft (12) gegen einen Ventilsitz (16) beaufschlagter Schließkörper (8) vorgesehen ist.

13. Druckregelventil (2) nach Anspruch 12, dadurch gekennzeichnet, daß der angespritzte Schließkörper (8) ein gegen den Ventilsitz (16) gerichtetes Kugelteil (8a) trägt.

14. Druckregelventil (2) nach einem der vorhergehenden Ansprüche, dadurch gekennzeichnet, daß das mindestens eine Gehäuseteil (4) ein Blechformteil ist.

15. Druckregelventil (2) nach Anspruch 1 oder 2, dadurch gekennzeichnet, daß in dem Ventilgehäuse (4) eine eine Ventilkammer (26) von dem Kraftstoffraum (24) trennende Membran (6) und ein mit der Membran (6) verbundener, von einer Schließkraft (12) gegen einen Ventilsitz (16) beaufschlagter, mindestens teilweise aus Kunststoff bestehender Schließkörper (8) vorgesehen ist.

## Claims

1. Pressure control valve (2) for fitting to a fuel supply system, in particular a fuel supply system of an internal combustion engine, with a valve housing (4), which surrounds a fuel space (24) and comprises at least one housing part (4a, 4b), with a fuel feed (32a), provided to feed fuel into the fuel space (24), and with a fuel return (20), provided to carry the fuel away from the fuel space (24), at least one stop piece (10) which contributes at least partially to the coupling of the pressure control valve (2) to the fuel supply system (30) being connected to the housing part (4a, 4b), characterized in that the at least one stop piece (10) is moulded onto the at least one housing part (4a, 4b).

2. Pressure control valve (2) according to Claim 1, characterized in that the fuel return (20) is guided through the moulded-on stop piece (10).

3. Pressure control valve (2) according to Claim 1 or 2, characterized in that a closing body (8) which is loaded against a valve seat (16) by a closing force (12) is provided in the valve housing (4), the valve seat (16) being provided on the moulded-on stop piece (10).

4. Pressure control valve (2) according to Claim 1 or 2, characterized in that a closing body (8) which is loaded against a valve seat (16) by a closing force (12) is provided in the valve housing (4), the valve seat (16) being provided on the housing part (4a, 4b).

5. Pressure control valve (2) according to one of Claims 1 to 4, characterized in that a sealing location (38) for the purpose of providing a seal between the fuel feed (32a) and the fuel return (20) is provided on the moulded-on stop piece (10).

6. Pressure control valve (2) according to Claim 5, characterized in that a first sealing element (38a) is provided at the sealing location (38).

7. Pressure control valve (2) according to Claim 5, characterized in that a seal (38b) is formed integrally on the stop piece (10) in the region of the sealing location (38).

8. Pressure control valve (2) according to one of Claims 1 to 7, characterized in that a housing sealing location (36) for the purpose of providing a seal between the fuel feed (32a) and a surrounding environment is provided on the moulded-on stop piece (10).

9. Pressure control valve (2) according to Claim 8, characterized in that a second sealing element (36a) is provided at the housing sealing location (36).

10. Pressure control valve (2) according to Claim 8, characterized in that a housing seal (36b) is formed on the stop piece (10) in the region of the housing sealing location (36).

11. Pressure control valve (2) according to one of the preceding claims, characterized in that the moulded-on stop piece (10) is in one coherent piece.

12. Pressure control valve (2) according to Claim 1 or 2, characterized in that a diaphragm (6) which separates a valve chamber (26) from the fuel space (24), and a closing body (8) which is moulded onto the diaphragm (6) and is loaded against a valve seat (16) by a closing force (12) are provided in the valve housing (4).

13. Pressure control valve (2) according to Claim 12, characterized in that the moulded-on closing body (8) carries a spherical part (8a) which faces the valve seat (16).

14. Pressure control valve (2) according to one of the preceding claims, characterized in that the at least one housing part (4) is a formed sheet-metal part.

15. Pressure control valve (2) according to Claim 1 or 2, characterized in that a diaphragm (6), which separates a valve chamber (26) from the fuel space (24), and a closing body (8), which is connected to the diaphragm (6), is loaded against a valve seat (16), by a closing force (12) and is composed at least partially of plastic, is provided in the valve housing (4).

## Revendications

1. Soupape de régulation de pression (2) pour être montée dans une installation d'alimentation en carburant, notamment d'un moteur à combustion interne comprenant :
- un corps de boîtier (4) entourant une chambre de carburant (24) et ayant au moins une partie de boîtier (4a, 4b),
- une arrivée de carburant (32a) pour fournir le carburant à la chambre à carburant (24) et,
- un retour de carburant (20) pour évacuer le carburant de la chambre de carburant (24),
- au moins une pièce de fixation (10) est reliée à la partie de boîtier (4a, 4b) pour coupler la soupape de régulation de pression (2) à l'installation d'alimentation en carburant (30), cette pièce de fixation (10) participant au moins partiellement à cette liaison,
caractérisée en ce qu'
au moins une pièce de fixation (10) est injectée sur au moins une partie de boîtier (4a, 4b).

2. Soupape de régulation de pression (2) selon la revendication 1,
caractérisée en ce que
le retour de carburant (20) passe par la pièce de fixation (10), injectée.

3. Soupape de régulation de pression (2) selon la revendication 1 ou 2,
caractérisée en ce que
le boîtier de soupape (4) comporte un organe d'obturation (8) appliqué contre un siège de soupape (16) par une force de fermeture (12), le siège de soupape (16) étant prévu sur la pièce de fixation (10) réalisée par injection.

4. Soupape de régulation de pression (2) selon la revendication 1 ou 2,
caractérisée en ce que
le corps de soupape (4) comporte un organe d'obturation (8) appliqué contre un siège de soupape (16) par une force de fermeture (12), le siège de soupape (16) étant prévu sur la partie de boîtier (4a, 4b).

5. Soupape de régulation de pression (2) selon l'une des revendications 1 à 4,
caractérisée en ce qu'
un point d'étanchéité (38) est prévu sur la pièce de fixation (10) injectée, pour réaliser l'étanchéité entre l'arrivée de carburant (32a) et le retour de carburant (20).

6. Soupape de régulation de pression (2) selon la revendication 5,
caractérisée par
un premier élément d'étanchéité (38a) prévu au niveau du point d'étanchéité (38).

7. Soupape de régulation de pression (2) selon la revendication 5,
caractérisée par
un moyen d'étanchéité (38b) formé sur la pièce de fixation (10) au niveau du point d'étanchéité (38).

8. Soupape de régulation de pression (2) selon les revendications 1 à 7,
caractérisée par
un point d'étanchéité de boîtier (36) prévu sur la pièce de fixation injectée (10), pour réaliser l'étanchéité entre l'arrivée de carburant (32a) et l'environnement.

9. Soupape de régulation de pression (2) selon la revendication 8,
caractérisée par
un second élément d'étanchéité (36a) sur le point d'étanchéité de boîtier (36).

10. Soupape de régulation de pression (2) selon la revendication 8,
caractérisée par
un joint de boîtier (36b) réalisé sur la pièce de fixation (10) au niveau du point d'étanchéité (36).

11. Soupape de régulation de pression (2) selon l'une quelconque des revendications précédentes,
caractérisée en ce que
la pièce de fixation (10) est réalisée en une seule partie.

12. Soupape de régulation de pression (2) selon les revendications 1 ou 2,
caractérisée par
une membrane (6) séparant une chambre de soupape (26) d'une chambre de carburant (24) et un organe d'obturation (8), injecté sur la membrane (6), et sollicité par une force de fermeture (12) pour être appliqué contre un siège de soupape (16).

13. Soupape de régulation de pression (2) selon la revendication 12,
caractérisée en ce que
l'organe d'obturation (8) injecté porte une pièce sphérique (8a) tournée vers le siège de soupape (16).

14. Soupape de régulation de pression (2) selon l'une quelconque des revendications précédentes,
caractérisée en ce qu'
au moins une partie de boîtier (4) est une pièce en tôle moulée.

15. Soupape de régulation de pression (2), selon les revendications 1 à 2,
caractérisée par
une membrane (6) séparant la chambre de soupape (26) de la chambre à carburant (24) dans le boîtier de soupape (4), et un organe d'obturation (8) au moins partiellement en matière plastique, appliqué contre un siège de soupape (16) par une force de fermeture (12), cet organe d'obturation étant relié à la membrane (6).
